# EUROPÄISCHE PATENTSCHRIFT

(11) **EP 0 570 416 B1**
(45) Veröffentlichungstag und Bekanntmachung des Hinweises auf die Patenterteilung: **20.12.1995**
(21) Anmeldenummer: 92903669.7
(22) Anmeldetag: 04.02.1992
(51) Int. Cl.: G11B 21/08, G11B 7/00

(54) **VERFAHREN ZUR VERKÜRZUNG DER ZUGRIFFSZEIT**
METHOD OF REDUCING ACCESS TIME
PROCEDE DE REDUCTION DU TEMPS D'ACCES

(30) Priorität: 09.02.1991 DE 4103975
(43) Veröffentlichungstag der Anmeldung: 24.11.1993
(73) Patentinhaber: Deutsche Thomson-Brandt GmbH, 78003 Villingen-Schwenningen (DE)
(72) Erfinder: BAAS, Dieter, D-7640 Kehl-Auenheim (DE)
(86) Internationale Anmeldenummer: EP9200240
(87) Internationale Veröffentlichungsnummer: WO9214248

(56) Entgegenhaltungen:
- EP-A- 0 348 949
- EP-A- 0 435 646
- US-A- 4 611 315
- US-A- 4 855 978

## Beschreibung

Die Erfindung betrifft ein Verfahren zur Verkürzung der Zugriffszeit auf einen bestimmten Zielpunkt einer Datenspur einer in einem Aufzeichnungs- und/oder Wiedergabegerät rotierenden Platte, indem die Anzahl A der zwischen der zuletzt abgetasteten Datenspur und der Zielspur liegenden Datenspuren berechnet wird.

In einem CD-Spieler tastet eine optische Abtastvorrichtung mittels eines Lichtstrahls die Daten eines rotierenden plattenförmigen Aufzeichnungsträgers, der sogenannten Compact-Disc, ab. Mittels eines Spurregelkreises wird der die Daten abtastende Lichtstrahl entlang der spiralförmigen Datenspuren der Platte geführt.

Damit der CD-Hörer ein von ihm gewünschtes Musikstück hören kann, wird die optische Abtastvorrichtung von der gegenwärtigen Position möglichst schnell zu der Datenspur geführt, auf der das gewünschte Musikstück beginnt. Der Lichtstrahl kreuzt während dieses Vorgangs, der als Spurspringen bezeichnet wird, eine Vielzahl von Datenspuren; er springt von der gerade abgetasteten Spur zur Zielspur. Je schneller das Spurspringen erfolgt, desto kürzer wird die Zugriffszeit, die Zeit, die der Bediener warten muß, bis er das gewünschte Musikstück hören kann.

Aus der US-A 4,855,978 ist ein optischer Videoplattenspieler bekannt. Beim Einschalten des Gerätes wird die optische Abtastvorrichtung in die Mitte der Videoplatte gefahren. Um die Zugriffszeit zu verkürzen, wird die Anzahl der zwischen der Position der Abtastvorrichtung in der Plattenmitte und der Zielspur liegenden Datenspuren berechnet.

In der US-A 4,611,315 ist ein optisches Wiedergabegerät beschrieben. Um in kurzer Zugriffszeit mit einem optischen Abtaster zur Zielspur springen zu können, wird die Differenz zwischen der Adresse der augenblicklich von der Abtastvorrichtung abgetasteten Datenspur und der Adresse der Zielspur ermittelt.

Weil aber nur auf eine Spur genau, nicht jedoch auch auf den Zielpunkt der Zielspur gesprungen werden kann, muß im ungünstigsten Fall eine Umdrehung der Platte abgewartet werden, ehe mit dem Lesen der Daten begonnen werden kann. Diese Wartezeit wirkt sich bei einem System, das die Daten mit konstanter Bahngeschwindigkeit abtastet - nach dem englischen Ausdruck Constant Linear Velocity häufig mit CLV-System abgekürzt - besonders nachteilig aus. Je nach dem, ob der Lichtstrahl zur innersten oder äußersten Datenspur der Platte gesprungen ist, schwankt die Wartezeit zwischen 120 ms und 330 ms, die zur Sprungzeit - das ist die Zeit, die der Lichtstrahl benötigt, um von der augenblicklichen Position zur Zielspur zu springen - hinzuzurechnen ist. Die Zugriffszeit auf einen bestimmten Zielpunkt auf einer Datenspur ist daher um 120 ms bis 330 ms erhöht.

Es ist deshalb Aufgabe der Erfindung, ein Verfahren anzugeben, das eine Verkürzung der Zugriffszeit erzielt.

Die Erfindung löst diese Aufgabe dadurch, daß die Winkellage des zuletzt abgetasteten Punktes auf der zuletzt abgetasteten Datenspur und die Winkellage des Zielpunktes auf der Zielspur berechnet werden, daß die Sprungzeit T bis zum Erreichen des Zielpunktes auf der Zielspur berechnet wird, daß aus der Anzahl A der Datenspuren, der Winkellagen der beiden Punkte und der Sprungzeit diejenige Drehzahl der Platte berechnet wird, die erforderlich ist, damit bei Erreichen der Zielspur der Zielpunkt oder ein Punkt innerhalb eines vorgebbaren Abstandes vor dem Zielpunkt erfaßt wird.

Die Erfindung- geht von der Erkenntnis aus, daß die Drehzahl der Platte so gewählt werden kann, daß bei Erreichen der Zielspur der Zielpunkt oder ein Punkt innerhalb eines vorgebbaren Abstandes vor dem Zielpunkt erfaßt wird. Weiter geht die Erfindung von der Erkenntnis aus, daß diese Drehzahl sich aus der Anzahl A der zwischen der zuletzt abgetasteten Datenspur und der Zielspur liegenden Datenspuren, aus der Winkellage des zuletzt abgetasteten Punktes und der Winkellage des Zielpunktes auf der Platte sowie aus der Dauer T des Sprungs berechnen läßt. Die Dauer des Sprungs kann aus der Anzaht A der zu überspringenden Spuren berechnet werden.

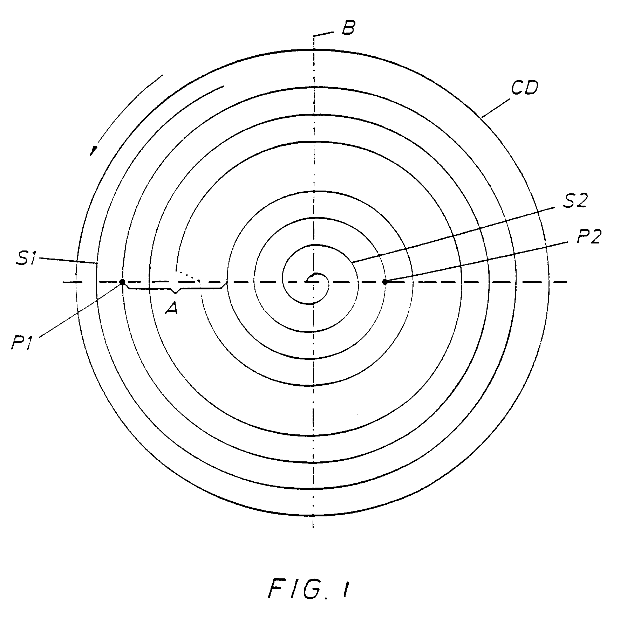

Anhand eines einfachen Zahlenbeispiels und mit Hilfe der Figur wird die Erfindung zuerst bei einem sogenannten CAV-System, der Abkürzung für Constant Angular Velocity, und anschließend bei einem sogenannten CLV-System, der Abkürzung für Constant Linear Velocity, erläutert.

In der Figur ist eine Platte CD gezeigt, auf der spiralförmige Datenspuren von innen nach außen verlaufen. Die Platte dreht sich in Pfeilrichtung. Zwischen der zuletzt abgetasteten Datenspur S1 und der Zielspur S2 mögen z.B. 500 Spuren liegen. Der zuletzt abgetastete Punkt P1 auf der zuletzt abgetasteten Datenspur S1 liegt auf einem Radius, der in Drehrichtung der Platte gesehen einen Winkel von +90° mit dem als Bezugsachse eingezeichneten senkrechten Durchmesser B einschließt. Der Zielpunkt P2 auf der Zielspur S2 liegt auf einem Radius, der einen Winkel von +180° zur Bezugsachse B einschließt. Die Dauer für den Sprung vom Punkt P1 zum Zielpunkt P2 möge z.B. T betragen.

Damit bei Erreichen der Zielspur S2 der Zielpunkt P2 erfaßt wird, muß sich die Platte während der Sprungzeit T um 1/2 ober um n + 1/2 Umdrehungen drehen. Es gibt unendliche viele Lösungen, weil n eine ganze Zahl ist.

Die Erfindung wird nun am Beispiel eines CAV-Systems erläutert.

Die Platte möge sich z.B. mit 300 Umdrehungen in der Minute drehen. Die Sprungzeit T möge beispielsweise eine halbe Sekunde betragen. In einer halben Sekunde macht die Platte 300/60x2 = 2 1/2 Umdrehungen. Wenn die Drehzahl von 300 Umdrehungen in der Minute beibehalten wird, trifft der die Platte abtastende Lichtstrahl bei Erreichen der Zielspur S2 genau auf den Zielpunkt P2.

Bei einem zweiten Zahlenbeispiel sei angenommen, daß die Sprungzeit T = 1 Sekunde beträgt. In einer Sekunde macht die Platte 300/60 = 5 Umdrehungen. Damit nun bei Erreichen der Zielspur S2 sofort der Zielpunkt P2 erfaßt wird, muß die Drehzahl der Platte so geändert werden, daß sie in der Sekunde z.B. 5 1/2 oder 4 1/2 Umdrehungen macht.

Wie bereits erwähnt sind mathematisch unendlich viele Lösungen möglich. Es ist daher sinnvoll, diejenigen Lösungen zu wählen, die am nächsten zur Ausgangsdrehzahl von 300 Umdrehungen in der Minute liegen. Das sind entweder 4 1/2 x 60 = 270 oder 5 1/2 x 60 = 330 Umdrehungen in der Minute. Wenn die Drehzahl der Platte daher zu Beginn des Sprungs auf 330 Umdrehungen in der Minute erhöht oder auf 270 Umdrehungen in der Minute erniedrigt wird, trifft der Lichtstrahl bei Erreichen der Zielspur S2 genau auf den Zielpunkt S2.

Wenn der Sprung von außen nach innen erfolgt, ist es bei einem CLV-System sinnvoll, die höhere der beiden berechneten Drehzahlen zu wählen, weil die Drehzahl der Platte beim Abtasten der Datenspuren von innen nach außen bei einem CLV-System abnimmt. Aus demselben Grund ist es bei Sprüngen von innen nach außen sinnvoll, die niedere der beiden Drehzahlen zu wählen.

Bei einem CLV-System ist es besonders vorteilhaft, zuerst die der Zielspur zugeordnete Drehzahl zu berechnen. Von allen möglichen Lösungen für die Drehzahl, die es ermöglichen, bei Erreichen der Zielspur S2 sofort den Zielpunkt P2 zu erfassen, wird diejenige Lösung ausgewählt, die der Drehzahl am nächsten kommt, die der Zielspur zugeordnet ist.

Diese Maßnahme hat die Vorteile, daß bei Erreichen der Zielspur nicht nur der Zielpunkt erfasst wird, sondern daß sich die Platte bereits annähernd mit der für die Zielspur vorgeschriebenen Drehzahl dreht.

Die Erfindung ist für Aufnahme- und/oder Wiedergabegeräte geeignet, die eine rotierende Platte berührungslos abtasten, wie z.B. CD-Spieler, Videoplattenspieler, DRAW-Disc-Spieler oder magneto-optische Geräte.

## Patentansprüche

1. Verfahren zur Verkürzung der Zugriffszeit auf einen bestimmten Zielpunkt einer Datenspur einer in einem Aufzeichnungs- und/oder Wiedergabegerät rotierenden Platte (CD), indem die Anzahl A der zwischen der zuletzt abgetasteten Datenspur (S1) und der Zielspur (S2) liegenden Datenspuren berechnet wird, **dadurch gekennzeichnet**, daß die Winkellage des zuletzt abgetasteten Punktes (P1) auf der zuletzt abgetasteten Datenspur (S1) und die Winkellage des Zielpunktes (P2) auf der Zielspur (S2) berechnet werden, daß die Sprungzeit T bis zum Erreichen des Zielpunktes (P2) auf der Zielspur (S2) berechnet wird, daß aus der Anzahl A der Datenspuren, der Winkellagen der beiden Punkte (P1, P2) und der Sprungzeit T diejenige Drehzahl der Platte (CD) berechnet wird, die erforderlich ist, damit bei Erreichen -der Zielspur (S2) der Zielpunkt (P2) oder ein Punkt innerhalb eines vorgebbaren Abstandes vor dem Zielpunkt (P2) erfaßt wird.

2. Verfahren nach Anspruch 1, **dadurch gekenneichnet**, daß von den unendlich vielen mathematisch möglichen Lösungen der Drehzahl diejenige Lösung gewählt wird, die der ursprünglichen Drehzahl der Platte am nächsten kommt.

3. Verfahren nach Anspruch 1, **dadurch gekennzeichnet**, daß bei einem CLV-System beim Springen von innen nach außen von den unendlich vielen mathematisch möglichen Lösungen der Drehzahl, die kleiner als die ursprüngliche Drehzahl sind, diejenige Lösung gewählt wird, die der ursprünglichen Drehzahl der Platte am nächsten kommt, während beim Springen von außen nach innen von den unendlich vielen mathematisch möglichen Lösungen der Drehzahl, die größer als die ursprüngliche Drehzahl sind, diejenige Lösung gewählt wird, die der ursprünglichen Drehzahl der Platte am nächsten kommt.

4. Verfahren nach Anspruch 1, **dadurch gekennzeichnet**, daß bei einem CLV-System von den unendlich vielen Lösungen diejenige gewählt wird, die am nächsten zu der Drehzahl liegt, die für die Zielspur vorgeschrieben ist.

## Claims

1. A method for shortening the access time to a particular target point of a data track of a disc (CD) rotating in a recording and/or reproduction device, in which there is calculated the number A of data tracks lying between the last data track scanned (S1) and the target track (S2), **characterised in that** the angular position of the last point scanned (P1) on the last data track scanned (S1) and the angular position of the target point (P2) on the target track (S2) are calculated, that the skip time T taken to reach the target point (P2) on the target track (S2) is calculated, that from the number A of data tracks, the angular positions of the two points (P1, P2) and the skip time T, there is calculated that rotational speed of the disc (CD) which is required so that, upon reaching the target track (S2), the target point (P2) or a point within a predeterminable distance ahead of the target point (P2) is detected.

2. A method according to claim 1, **characterised in that** from the infinite number of mathematically possible solutions for the rotational speed, that solution is selected which comes nearest to the original rotational speed of the disc.

3. A method according to claim 1, **characterised in that** with a CLV system, upon skipping from the inside to the outside, there is chosen from the infinite number of mathematically possible solutions for the rotational speed which are lower than the original rotational speed, that solution which lies closest to the original rotational speed of the disc, while upon skipping from the outside to the inside, there is chosen from the infinite number of mathematical solutions for the rotational speed which are higher than the original rotational speed, that solution which lies closest to the original rotational speed of the disc.

4. A method according to claim 1, **characterised in that** with a CLV system, from the infinite number of solutions that is selected which lies closest to the rotational speed prescribed for the target track.

## Revendications

1. Procédé pour réduire le temps d'accès à un point cible défini sur une piste enregistrée d'un disque (CD) tournant dans un appareil enregistreur et/ou lecteur, grâce au calcul du nombre A des pistes comprises entre la dernière piste lue (S1) et la piste cible (S2), **caractérisé en ce que** sont calculées la position angulaire du dernier point balayé (P1) situé sur la dernière piste lue (S1) et la position angulaire du point cible (P2) sur la piste cible (S2), ainsi que la durée de saut T s'écoulant avant d'atteindre le point cible (P2) sur la piste cible (S2), et **caractérisé en ce que** le nombre A des pistes enregistrées, les positions angulaires des deux points (P1, P2) et la durée de saut T servent de base pour calculer la vitesse de rotation du disque (CD) qui est nécessaire pour tomber sur le point cible (P2) ou sur n'importe quel point situé à une distance prédéfinie en amont du point cible (P2), au moment où le faisceau lecteur atteint la piste cible (S2).

2. Procédé selon la revendication 1 **caractérisé en ce que** la vitesse la plus proche de la vitesse de rotation initiale du disque est choisie parmi les innombrables solutions mathématiques possibles.

3. Procédé selon la revendication 1 **caractérisé en ce que**, pour un saut effectué de l'intérieur vers l'extérieur dans un système CLV, la vitesse de rotation choisie parmi les innombrables solutions mathématiques possibles, qui sont inférieures à la vitesse de rotation initiale, sera celle qui est la plus proche de la vitesse de rotation initiale du disque, tandis que, pour un saut effectué de l'extérieur vers l'intérieur, la vitesse de rotation choisie parmi les innombrables solutions mathématiques possibles, qui sont supérieures à la vitesse de rotation initiale, sera celle qui est la plus proche de la vitesse de rotation initiale du disque.

4. Procédé selon la revendication 1 **caractérisé en ce que**, pour un système CLV, la vitesse de rotation choisie parmi le nombre infini de solutions, sera celle qui est plus proche de la vitesse de rotation exigée pour la piste cible.
